# EUROPEAN PATENT APPLICATION

(11) **EP 3 410 700 A1**
(43) Date of publication of application: **05.12.2018**
(21) Application number: 17744087.2
(22) Date of filing: 20.01.2017
(51) Int. Cl.: H04N 5/64, G09F 9/00

(54) **ATTACHMENT TOOL, DISPLAY SYSTEM, AND ATTACHMENT SYSTEM**

(30) Priority: 28.01.2016 JP 2016014664
(71) Applicant: Brother Kogyo Kabushiki Kaisha, Nagoya-shi, Aichi 467-8561 (JP)
(72) Inventor: SUGIMOTO Kiyoshi, Nagoya-shi Aichi 467-8561 (JP); TERADA Kohei, Nagoya-shi Aichi 467-8561 (JP)
(74) Representative: J A Kemp
(86) International application number: PCT/JP2017/001895
(87) International publication number: WO 2017/130857

(57) **Abstract**

The present disclosures provide an attaching fixture, a display system and an attaching system that makes it possible to easily realize, with a simple configuration, a function of retracting an attached member to a position that does not obstruct a viewing field when the attached member is not in use. The attaching fixture 2 includes a main body part 20 movable with respect to a helmet worn on a head of a user between a first position and a second position. The main body part 20 includes a supporting edge 22 supporting an image display device with respect to the main body part 20. The supporting edge 22 forms a third opening 27. Further, the main body part 20 couples with the helmet and includes a first guiding edge 21 configured to guide a position of the main body part 20 with respect to the helmet between the first position and the second position in a first direction A1. The first guiding edge 21 forms a first opening 26.

## Description

### TECHNICAL FIELD

The present disclosures relate to an attaching fixture for attaching an attached member on a head, a display system and an attaching system.

### BACKGROUND ART

An attaching fixture for attaching an attached member, such as an optical apparatus or a display device, on the head has been known. Further, an attaching fixture having a function of retracting the attached member to a position that does not obstruct a viewing field when the attached member is not in use has been proposed. Patent Document 1 discloses an optical apparatus holding device for attaching an optical apparatus on a helmet. In the optical device holding apparatus, the optical apparatus is attached on an attaching body. The attaching body is held by a holding body rotatably in an up-down direction. The holding body is supported by a guiding supporting body movably in a lateral direction. The guiding supporting body is fixed to the helmet.

### PRIOR ART DOCUMENT

### PATENT DOCUMENTS

[Patent Document 1] Japanese Patent Provisional Publication No.2009-180954

### SUMMARY OF THE INVENTION

### PROBLEM TO BE SOLVED

In the optical apparatus holding device, the rotation of the attaching body in the up-down direction is realized by a structure in which spherical bases of the holding body clamp a spherical portion of the attaching body in the lateral direction. Further, in the optical apparatus holding device, the lateral movement of the attaching body is realized by a structure in which a guide part of the holding body engages with a guide part provided to the guiding supporting body. As described above, in the optical apparatus holding device, the number of components necessary to make the optical apparatus movable is large. Therefore, the structure becomes complex and, in some cases, cost increases.

An object of the present disclosures is to provide an attaching fixture, a display system and an attaching system that makes it possible to easily realize, with a simple configuration, the function of retracting the attached member to a position that does not obstruct a viewing field when the attached member is not in use.

### MEANS FOR SOLVING THE PROBLEM

An attaching fixture according to the first embodiment of the present disclosures is provided with a main body part being movable, with respect to a mounting fixture worn on a head of a user, between a first position and a second position. The main body part includes a supporting part configured to support an attached member with respect to the main body part, and a first guiding part configured to be coupled to the mounting fixture and to guide a position of the supporting part of the main body part, with respect to the mounting fixture, between the first position and the second position in a first direction.

In the attaching fixture according to the first embodiment, the main body part can guide the movement of the attached member with respect to the mounting fixture with the first guiding part. Therefore, the attaching fixture can make the attached member to retract to a position that does not obstruct the viewing field of the user when the attached member is not in use. Also, the attaching fixture couples the attached member to the mounting fixture by coupling the main body part to the mounting fixture with the first guiding part. That is, the attaching fixture can realize a mechanism for coupling the attached member to the mounting fixture and a mechanism for retracting the attached member with the common first guiding part. Therefore, the attaching fixture makes it possible to reduce the number of components as compared to a case where the coupling function and the retracting function for the attached member with respect to the mounting fixture are realized with separate members. The attaching fixture makes it possible to easily realize the coupling function and the retracting function for the attached member with simple configurations.

In the first embodiment, the main body part may further include a second guiding part configured to be coupled to the mounting fixture and to guide a position of the supporting part of the main body part, with respect to the mounting fixture, between the second position and a third position in a second direction. The first direction and the second direction may intersect with each other. A distance between the mounting fixture and the supporting part when the main body part is arranged at the third position may be greater than a distance between the mounting fixture and the supporting part when the main body part is arranged at the second position. In this case, the first guiding part can guide the main body part between the first position and the second position in the first direction as well as guide the main body part between the second position and the third position in the second direction. Also, the distance between the mounting fixture and the supporting part is greater when the main body part is arranged at the third position than when the main body part is arranged at the second position. Therefore, the attaching fixture makes it possible to retract the attached member to a further appropriate position when the attached member is not in use while keeping its simple configurations.

In the first embodiment, the main body part may be configured to be coupled to the mounting fixture by a coupling part provided to at least one of the mounting fixture and the main body part. In this case, the attaching fixture makes it possible to move the supporting part of the main body part, with respect to the mounting fixture, in the first direction by using the coupling part provided to at least one of the mounting fixture and the main body part.

In the first embodiment, the first guiding part may have a first guiding edge being an annular edge forming a first opening of the main body part. The first guiding edge may be configured to guide the coupling part, positioned between the mounting fixture and the main body part, in the first direction along the first opening. In this case, the coupling part is inserted into the first opening formed by the first guiding edge. Also, in accordance with the relative movement of the coupling part along the first opening, the main body part moves with respect to the mounting fixture in the first direction. Therefore, the attaching fixture realizes the coupling function and the retracting function for the attached member with simpler configurations.

In the first embodiment, the second guiding part may have a second guiding edge being an annular edge forming a second opening of the main body part. The second guiding edge may be configured to guide the coupling part, positioned between the mounting fixture and the main body part, in the second direction along the second opening. In this case, the coupling part is inserted into the second opening formed by the second guiding edge. Also, in accordance with the movement of the coupling part along the second opening, the main body part moves with respect to the mounting fixture in the second direction. Therefore, the attaching fixture can realizes the coupling function and the retracting function for the attached member with simpler configurations.

An attaching fixture according to the second embodiment of the present disclosures is attached to a mounting fixture worn on a head of a user and has a main body part. The main body part includes a supporting part configured to support an attached member with respect to the main body part, and a first guiding part having an annular first guiding edge forming a first opening configured to be coupled to a coupling part provided to the mounting fixture. In the second embodiment, the main body part is attached to the mounting fixture by coupling the first guiding part to the coupling part. In this case, since the coupling part is provided to the mounting fixture, there is no need to newly provide a member for coupling the attaching fixture to the mounting fixture. Therefore, the attaching fixture can be easily attached to the mounting fixture. Also, the coupling part of the mounting fixture s coupled to the first opening of the first guiding part. For example, by relatively moving the coupling part with respect to the main bodypart along the first opening, a position of the attaching fixture with respect to the mounting fixture can be moved. Therefore, the attaching fixture makes it possible to easily realize the function for retracting the attached member to a position that does not obstruct the viewing field of the user with simple configurations.

In the second embodiment, the first guiding edge may be configured to guide a position of the supporting part of the main body part, with respect to the mounting fixture, between a first position and a second position in a first direction by guiding the coupling part along the first opening. In this case, the attaching fixture can realize a mechanism for coupling the attached member to the mounting fixture and a mechanism for guiding movement for retracting the attached member with the common first guiding part. Therefore, the attaching fixture makes it possible to reduce the number of components as compared to a case where the coupling function and the retracting function for the attached member with respect to the mounting fixture are separately realized with separate members. The attaching fixture makes it possible to easily realize the coupling function and the retracting function for the attached member with simple configurations.

In the second embodiment, the main body part may further include a second guiding part having an annular second guiding edge forming a second opening configured to be coupled to the coupling part. The second guiding edge may guide a position of the supporting part of the main body part, with respect to the mounting fixture, between the second position and a third position in a second direction by guiding the coupling part along the second opening. The first direction and the second direction may intersect with each other. A distance between the mounting fixture and the supporting part when the main body part is arranged at the third position may be greater than a distance between the mounting fixture and the supporting part when the main body part is arranged at the second position. In this case, the first guiding part can guide the main body part between the first position and the second position in the first direction as well as guide the main body part between the second position and the third position in the second direction. Also, the distance between the mounting fixture and the supporting part is greater when the main body part is arranged at the third position than when the main body part is arranged at the second position. Therefore, the attaching fixture makes it possible to retract the attached member to a further appropriate position when the attached member is not in use while keeping its simple configurations.

In the first embodiment or the second embodiment, the coupling part may be integrally formed on the mounting fixture. In this case, the attaching fixture makes it possible to stably move the main body part with respect to the mounting fixture.

In the first embodiment and the second embodiment, the main body part may be configured to move along at least one of two opposing surfaces of the mounting fixture. In this case, the attaching fixture makes it possible to stably move the main body part with respect to the mounting fixture.

In the first embodiment and the second embodiment, the first guiding part may be arranged along a surface, among two opposing surfaces of the mounting fixture, on a side closer to the head in a state where the mounting fixture is worn by the user. In this case, a surface area of a portion of the main body part exposed to outside of the mounting fixture can be suppressed as compared to a case where the first guiding edge is arranged along a surface, among the two opposing surfaces of the mounting fixture, on a side away from the head. Therefore, a possibility that the attaching fixture obstructs work of the user can be reduced.

In the first embodiment and the second embodiment, the supporting part and the first guiding part may be separated in an orthogonal direction being orthogonal to the first direction. A rigidity of the main body part in the orthogonal direction may be greater than a rigidity of the main body part in the first direction. In this case, since the rigidity of the main body part becomes relatively smaller in the first direction than in the orthogonal direction, the main body part becomes easier to curve in the first direction. Therefore, for example, even in a case where the mounting fixture curves in accordance with the shape of the head, the main body part can be easily made to curve along the mounting fixture, and thus the main body part can be moved with respect to the mounting fixture smoothly in the first direction.

In the first embodiment and the second embodiment, the first guiding edge may include a first protrusion protruding inside the first opening, the first protrusion being a portion that restricts movement of the main body part with respect to the mounting fixture in the first direction. In this case, a possibility that the attaching fixture unintendedly moves with respect to the mounting fixture when an impact is applied to the mounting fixture and the attaching fixture from outside can be lessened.

In the first embodiment and the second embodiment, the main body part may have at least two first guiding parts, and the supporting part may be provided between the two first guiding parts in the first direction. In this case, the attaching fixture can stably support the attached member with the supporting part as compared to a case where the supporting part is not provided between the two first guiding parts.

A display system according to the third embodiment of the present disclosures has a mounting fixture to be worn on a head of a user, an attaching fixture including a main body part being movable, with respect to the mounting fixture, between a first position and a second position, and a display device being supported by the attaching fixture and being capable to display an image. The main body part includes a supporting part configured to support the display device with respect to the main body part, a first guiding part configured to be coupled to the mounting fixture and to guide a position of the supporting part of the main body part, with respect to the mounting fixture, between the first position and the second position in a first direction, and a second guiding part configured to be coupled to the mounting fixture and to guide a position of the supporting part of the main body part, with respect to the mounting fixture, between the second position and a third position in a second direction. The first direction and the second direction intersect with each other. A distance between the mounting fixture and the supporting part when the main body part is arranged at the third position is greater than a distance between the mounting fixture and the supporting part when the main body part is arranged at the second position. According to the third embodiment, the attaching fixture of the display system allows the user to visually recognize the image displayed on the display device by supporting the display device in front of the eye of the user. Also, the attaching fixture can make the display device to retract to a position that does not obstruct the viewing field of the user when the display device is not in use. Therefore, the attaching fixture makes it possible to easily realize the function for arranging the display device in front of the eye of the user and the function for retracting the display device to a position that does not obstruct the viewing field of the user with simple configurations.

In the third embodiment, the first position may be positioned forward of the second position with respect to the user in a state where the mounting fixture is worn on the head. In this case, the attaching fixture makes it possible to arrange the display device in front of the eye of the user by arranging the main body part at the first position. On the other hand, the attaching fixture makes it possible to retract the display device to a position that does not obstruct the viewing field of the user by moving the main body part to the second position.

In the third embodiment, the third position may be positioned below the first position and the second position in a state where the mounting fixture is worn on the head. In this case, the attaching fixture makes it possible to retract the display device to a further appropriate position that does not obstruct the viewing field of the user by moving the main body part to the third position via the first position.

In the third embodiment, the main body part may be movable with respect to the mounting fixture with n degrees of freedom ("n" being an integral number), and the display device may be moveable with respect to the main body part with degrees of freedom greater than n. In this case, the attaching fixture makes it possible to move the display device to a position that the user desires by allowing the display device to move with respect to the main body part with degrees of freedom greater than n. Also, the attaching fixture makes it possible to retract the display device to a position that does not obstruct the viewing field of the user by allowing the main body part to move with respect to the mounting fixture with n degrees of freedom. Further, by making the degrees of freedom of the movement of the main body part with respect to the mounting fixture smaller than the degrees of freedom of the movement of the display device with respect to the main body part, the user can easily return the retracted display device to the original position.

An attaching system according to the fourth embodiment of the present disclosures has a mounting fixture to be worn on a head of a user and an attaching fixture including a main body part. The main body part includes a supporting part configured to support an attached member with respect to the main body part, and a first guiding part having an annular first guiding edge forming a first opening configured to be coupled to a coupling part provided to the mounting fixture. According to the fourth embodiment, the same effect as the second embodiment can be obtained. Since the coupling part is provided to the mounting fixture, there is no need to newly provide a member for coupling the attaching fixture to the mounting fixture.

In the fourth embodiment, the first guiding edge may be configured to guide a position of the supporting part of the main body part, with respect to the mounting fixture, between a first position and a second position in a first direction by guiding the coupling part along the first opening. The first position may be positioned forward of the second position with respect to the user in a state where the mounting fixture is worn on the head. In this case, in the attaching system, it becomes possible to arrange the attached member in front of the eye of the user by arranging the main body part at the first position. On the other hand, in the attaching system, it becomes possible to retract the attached member to a position that does not obstruct the viewing field of the user by arranging the main body part at the second position. Further, in the attaching system, after the main body part is once moved from the first position to the second position, by returning the main body part to the original first position, the retracted attached member can be easily returned to the original position.

In the fourth embodiment, the mounting fixture may be a cap body. In this case, in the attaching system, it becomes possible to allow a user wearing a cap body to use the attached member.

In the fourth embodiment, the cap body may have a holding part, configured to hold an inner body, as the coupling part. In this case, in the attaching system, the main body part can be coupled to the holding part holding the inner body of the cap body. Therefore, even in a case where it is difficult to newly add a coupling part to a cap body, the attaching fixture can be easily attached to the cap body using the holding part.

An attaching system according to the fifth embodiment of the present disclosures has a mounting fixture to be worn on a head of a user and an attaching fixture including a main body part being movable, with respect to the mounting fixture, between a first position and a second position. The main body part includes a supporting part configured to support an attached member with respect to the main body part, and a first guiding part configured to be coupled to the mounting fixture and to guide a position of the supporting part of the main body part, with respect to the mounting fixture, between the first position and the second position in a first direction. According to the fifth embodiment, the same effect as the first embodiment can be obtained.

In the fifth embodiment, the first position may be positioned forward of the second position with respect to the user in a state where the mounting fixture is worn on the head. In this case, in the attaching system, it becomes possible to arrange the attached member in front of the eye of the user by arranging the main body part at the first position. On the other hand, in the attaching system, it becomes possible to retract the attached member to a position that does not obstruct the viewing field of the user by arranging the main body part at the second position. Further, in the attaching system, after the main body part is once moved from the first position to the second position, by returning the main body part to the original first position, the retracted attached member can be easily returned to the original position.

In the fifth embodiment, the mounting fixture may be a cap body. In this case, in the attaching system, it becomes possible to allow a user wearing a cap body to use the attached member.

In the fifth embodiment, the cap body may have a holding part configured to hold an inner body, and the main body part may be coupled to the cap body by the holding part. In this case, in the attaching system, the main body part can be coupled to the holding part holding the inner body of the cap body. Therefore, even in a case where it is difficult to newly add a coupling part to a cap body, the attaching fixture can be easily attached to the cap body using the holding part.

### BRIEF DESCRIPTION OF THE DRAWINGS

[Fig. 1] Fig. 1 is a perspective view of an HMD 1 with a main body part 20 being arranged at a first position.
[Fig. 2] Fig. 2 is a diagram showing an inner surface 81B of a helmet 8 (without an inner body 85).
[Fig. 3] Fig. 3 is a diagram showing an inner surface 81C of the helmet 8 (with the inner body 85).
[Fig. 4] Fig. 4 is a left side view of an attaching fixture 2.
[Fig. 5] Fig. 5 is a diagram showing the attaching fixture 2 moving between the first position (solid line) and a second position (dotted line).
[Fig. 6] Fig. 6 is a perspective view of a connection fixture 9 and an image display device 10.
[Fig. 7] Fig. 7 is a perspective view of the connection fixture 9.
[Fig. 8] Fig. 8 is a perspective view of the HMD 1 with the main body part 20 being arranged at the second position.
[Fig. 9] Fig. 9 is a left side view of an attaching fixture 7 according to a first modification.
[Fig. 10] Fig. 10 is a diagram showing the attaching fixture 7 moving between a first position (solid line) and a second position (dotted line) in the first modification.
[Fig. 11] Fig. 11 is a diagram showing the attaching fixture 7 moving between the second position (solid line) and a third position (dotted line) in the first modification.
[Fig. 12] Fig. 12 is a perspective view of the HMD 1 with a main body part 70 being arranged at the third position in the first modification.
[Fig. 13] Fig. 13 is a left side view of an attaching fixture 2A according to the second modification.

### DESCRIPTION OF THE EMBODIMENTS

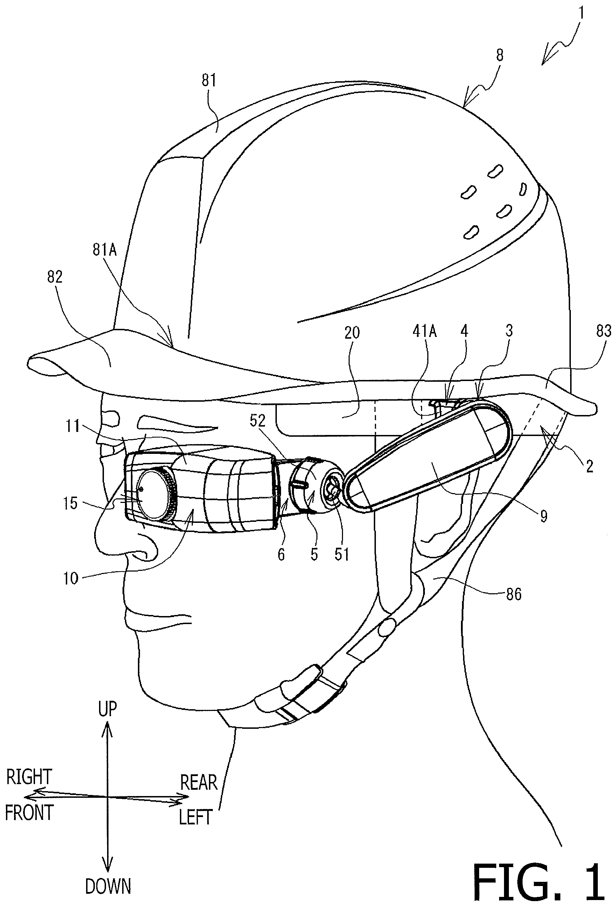

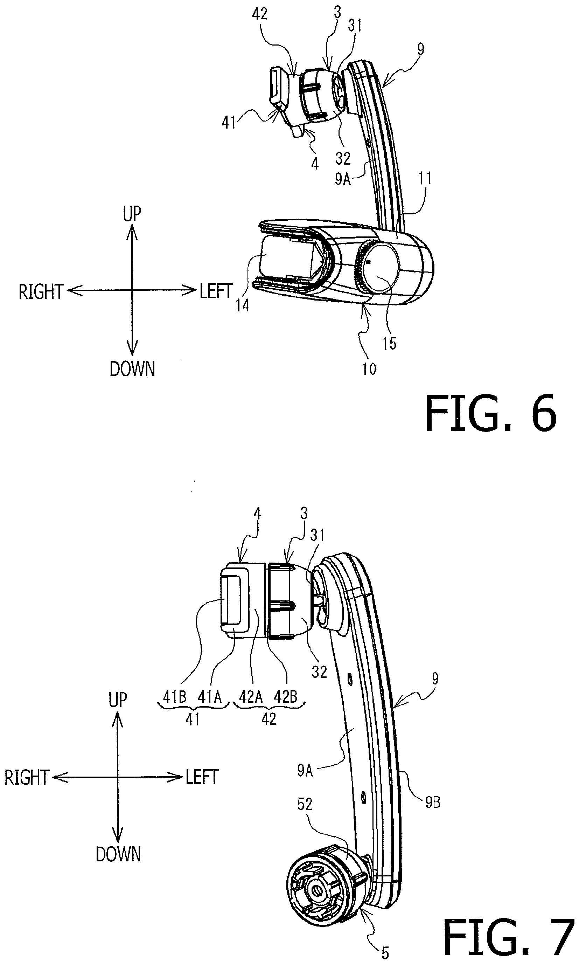

Hereinafter, referring to the drawings, an embodiment of the present disclosures will be described. As shown in Fig. 1, a head-mounted display (hereinafter, referred to as an "HMD") 1 is a light transmission type see-through HMD. The HMD 1 includes a helmet 8, an attaching fixture 2, a connection fixture 9, and an image display device 10. Light from a scenery in front of an eye of a user is directly guided to the eye of the user by passing through a half mirror 14 (see Fig. 6) of the image display device 10. A projection type of the HMD 1 is a virtual image projection type. The half mirror 14 reflects light of an image displayed on a liquid crystal unit housed in the image display device 10 toward the left eye of the user. The HMD 1 is capable of making the user recognize the scenery in front of the eye of the user with the image superimposed.

Hereinafter, in order to assist in understanding the description of the drawings, an upper side, a lower side, a left side, a right side, a front side and a rear side of the HMD 1 will be defined. The upper side, the lower side, the left side, the right side, the front side and the rear side of the HMD 1 respectively correspond, for example, to an upper side, a lower side, a lower right side, an upper left side, a left side and a right side indicated in Fig. 1. The upper side, the lower side, the left side, the right side, the front side and the rear side of the HMD 1 respectively correspond to an upper side, a lower side, a left side, a right side, a front side and a rear side of the user who is wearing the helmet 8.

### <Helmet 8>

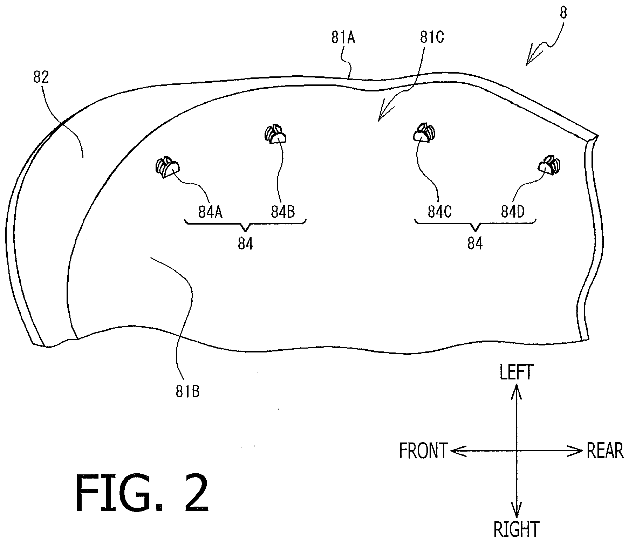

As shown in Fig. 1, the helmet 8 is a well-known working helmet to be worn on the head of the user. The helmet 8 has a cap body 81, a brim 82, and a rain guard 83. The cap body 81 has a substantially semispherical shape. An inner surface 81B (see Fig. 2) of the cap body 81 is in proximity to the head of the user in a state where the helmet 8 is worn on the head of the user. The brim 82 extends frontward from an edge 81A at the front side of the cap body 81. The rain guard 83 is provided on the edge 81A of the cap body 81 at the left side, the right side and the rear side.

As shown in Fig. 2, holding parts 84A, 84B, 84C and 84D are provided on the inner surface 81B of the cap body 81 of the helmet 8. The holding parts 84A, 84B, 84C and 84D are arranged near a left side portion, with respect to a center in the right-left direction, of the edge 81A of the cap body 81. The holding parts 84A-84D protrude inwardly from the inner surface 81B of the cap body 81. Hereinafter, a portion of the inner surface 81B of the cap body 81 where the holding parts 84A-84D are provided will be referred to as a "left inner surface 81C." The holding parts 84A-84D are arranged at regular intervals in the front-rear direction. It is noted that, although not shown in the figures, four holding parts corresponding to the holding parts 84A-84D are also provided on the inner surface 81B of the cap body 81 of the helmet 8 near a right side portion, with respect to the center in the right-left direction, of the edge 81A of the cap body 81. Hereinafter, the holding parts 84A-84D and the four holding parts provided near the right side portion of the edge 81A will be collectively referred to as "holding parts 84." Each of the holding parts 84 slightly broadens outwardly at a tip in the protruding direction. The shape of each of the holding parts 84 except the tip portion thereof is substantially cylindrical.

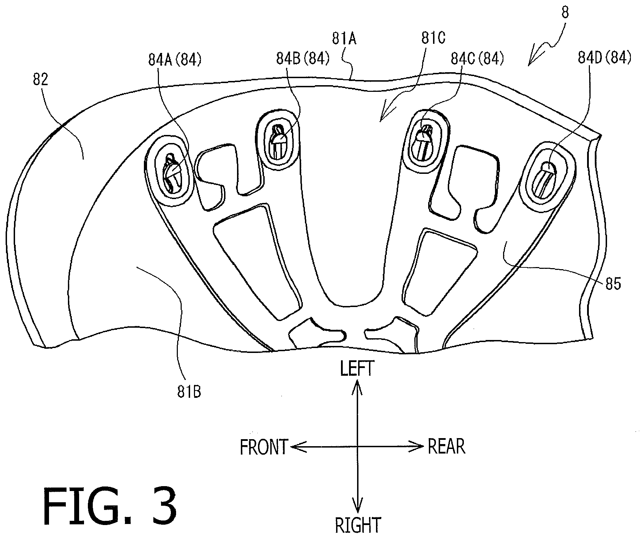

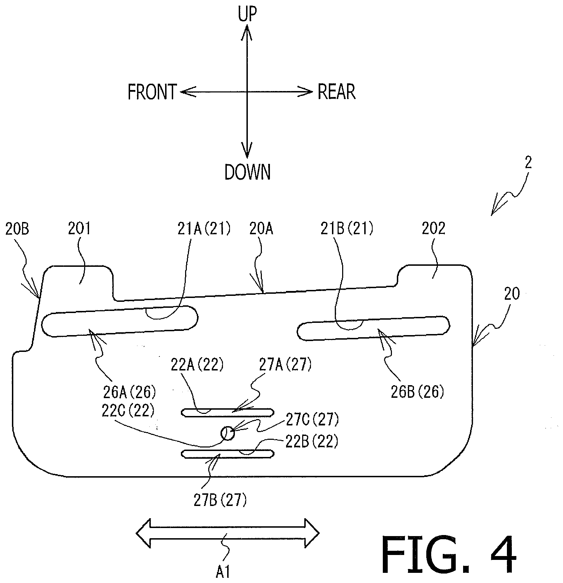

As shown in Fig. 3, the holding parts 84 are formed on the inner surface 81B of the well-known helmet 8 in advance by integral molding as structures for attaching and holding an inner body 85 and a chin strap 86 (see Fig. 1). Further, a not-shown liner formed of foamed styrene is clamped between the inner surface 81B of the cap body 81 and the inner body 85. Further, as will be described in detail later, an attaching fixture 2 (see Fig. 4) is attached to the holding parts 84B and 84C.

### <Attaching Fixture 2>

As shown in Fig. 4, the attaching fixture 2 has a main body part 20. The main body part 20 is a substantially rectangular plate-like member elongated in the front-rear direction. The main body part 20 is made of resin. Edges of the main body part 20 is curved. An upper end of the main body part 20 protrudes upwardly at both ends in the front-rear direction. A protruding part at the font side will be referred to as a "protruding section 201." A protruding part at the rear side will be referred to as a "protruding section 202." The upper end of the main body part 20 is recessed downward at a portion between the protruding sections 201 and 202. Hereinafter, the portion of the upper end of the main body part 20 that is recessed downward will be referred to as a recessed section 20A. A front end of the main body part 20 is recessed rearward at the protruding section 201. Hereinafter, the portion of the front end of the main body part 20 that is recessed rearward will be referred to as a recessed section 20B. The main body part 20 has first guiding edges 21A and 21B (hereinafter collectively referred to as "first guiding edges 21"), and supporting edges 22A, 22B and 22C (hereinafter collectively referred to as "supporting edges 22"). The first guiding edges 21 and the supporting edges 22 are annular edges forming respective openings. The openings formed by the first guiding edges 21 and the supporting edges 22 penetrate through the main body part 20 in the right-left direction.

The first guiding edges 21 form openings elongated in the front-rear direction. The first guiding edges 21 are formed on an upper side of the main body part 20 with respect to a center in the up-down direction. The first guiding edges 21A and 21B have substantially the same shape. Hereinafter, the opening formed by the first guiding edge 21A will be referred to as a "first opening 26A." The opening formed by the first guiding edge 21B will be referred to as a "first opening 26B." The first openings 26A and 26B will be collectively referred to as "first openings 26."

A length (width) of each of the first openings 26 in the up-down direction is substantially the same as a sectional diameter of each of the holding parts 84 (see Fig. 2) except the tip thereof. The first opening 26A extends linearly rearward from the proximity of the front end of the main body part 20. The first opening 26B extends linearly frontward from the proximity of a rear end of the main body part 20. Lengths of the first openings 26A and 26B are substantially 1/3 of a length of the main body part 20 in the front-rear direction. Positions of the first openings 26A and 26B in the up-down direction are substantially the same. The first openings 26A and 26B are separated in the front-rear direction.

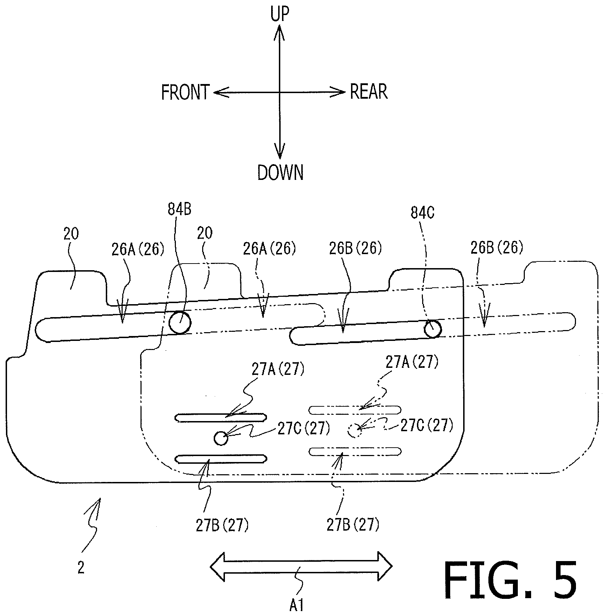

The attaching fixture 2 is coupled to the left inner surface 81C (see Fig. 2 and Fig. 3) of the cap body 81 of the helmet 8 by the first guiding edges 21. As shown in Fig. 5, tire holding part 84B of the helmet 8 is inserted through the first opening 26A from tire left side. The holding part 84C of the helmet 8 is inserted through the first opening 26B from the left side. The first guiding edges 21 are arranged along the left inner surface 81C of the helmet 8. It is noted that the left inner surface 81C of the helmet 8 is slightly curved. Therefore, the main body part 20 also slightly curves along the left inner surface 81C in a state where the main body part 20 is coupled to the helmet 8. The first guiding edges 21A and 21B guide the holding parts 84B and 84C in a direction along the first openings 26A and 26B. The attaching fixture 2 is relatively movable with respect to the holding parts 84B and 84C of the helmet 8 in the direction along the first openings 26A and 26B.

Solid lines in Fig. 5 show a state where the main body part 20 has moved to the foremost side with respect to the helmet 8. Hereinafter, the position of the main body part 20 in this state will be referred to as a "first position." Dotted lines in Fig. 5 show a state where the main body part 20 has moved to the rearmost side with respect to the helmet 8. Hereinafter, the position of the main body part 20 in this state will be referred to as a "second position." A moving direction of the main body part 20 when the main body part 20 moves between the first position and the second position will be referred to as a "first direction A1." The main body part 20 is movable with respect to the helmet 8 with one degree of freedom. It is noted that the first direction A1 coincides with the direction along the first openings 26A and 26B. The first openings 26A and 26B are curved in a direction along the left inner surface 81C in a state where the main body part 20 is arranged along the left inner surface 31C of the cap body 81 of the helmet 8. Therefore, the first direction A1 is curved with respect to the front-rear direction.

As shown in Fig. 4, the supporting edges 22 are formed on a lower side of the main body part 20 with respect to the center in the up-down direction. It is noted that, as described above, the first guiding edges 21 are formed on the upper side of the main body part 20 with respect to the center in the up-down direction. Therefore, the first guiding edges 21 and the supporting edges 22 are separated in the up-down direction orthogonal to the first direction A1 (hereinafter also referred to as an "orthogonal direction"). To the supporting edges 22, the image display device 10 (see Fig. 1) is connected via a connection fixture 9, connection members 4 and 6, and ball joints 3 and 5 (see Fig. 1) which will be described later.

The supporting edges 22A and 22B form openings elongated in the right-left direction. The supporting edges 22A and 22B have substantially the same shape. The supporting edge 22C forms a circular opening. Hereinafter, the opening formed by the supporting edge 22A will be referred to as a "third opening 27A." The opening formed by the supporting edge 22B will be referred to as a "third opening 27B." The opening formed by the supporting edge 22C will be referred to as a "third opening 27C." The third openings 27A, 27B and 27C will be collectively referred to as "third openings 27."

The third openings 27A and 27B extend in parallel with each other with an interval in the up-down direction. The third opening 27A is arranged on an upper side with respect to the third opening 27B. The third opening 27C is arranged between the third openings 27A and 27B in the up-down direction. Positions of front ends of the third openings 27A and 27B and a position of a rear end of the first opening 26A substantially coincide in the first direction A1. Positions of rear ends of the third openings 27A and 27B are located at a front side with respect to a position of a front end of the first opening 26B in the first direction A1. Therefore, the supporting edges 22 are arranged between the first guiding edges 21A and 21B in the first direction A1.

To the main body part 20, a plurality of not shown slits extending in the orthogonal direction are provided. The plurality of slits adjust rigidities of the main body part 20 in the first direction A1 and the orthogonal direction. By providing the plurality of slits, the rigidity of the main body part 20 in the orthogonal direction becomes greater than the rigidity of the main body part 20 in the first direction A1.

### <Connection Fixture 9, Connection Members 4 and 6, Ball Joints 3 and 5>

As shown in Figs. 6 and 7, the connection member 4 has a connection part 41 and a cylindrical part 42. The connection part 41 detachably connects the connection member 4 to the attaching fixture 2 (see Fig. 4). As shown in Fig. 7, the connection part 41 has an outside part 41A and an inside part 41B. The outside part 41A and the inside part 41B clamp a portion of the main body part 20 (see Fig. 4) of the attaching fixture 2, where the supporting edges 22 (see Fig. 4) are formed, from both the right and left sides. The outside part 41A is arranged at the left side with respect to the main body part 20, and the inside part 41B is arranged at the right side with respect to the main body part 20. The outside part 41A has protrusions protruding rightward from both edges in the up-down direction. These protrusions enter the third openings 27A and 27B (see Fig. 4) of the attaching fixture 2 from the left side and protrude to the right side. The outside part 41A and the inside part 41B have a not shown hole penetrating in the right-left direction. A not shown screw is inserted to the hole of the inside part 41B from the right side, passes through the third opening 27C (see Fig. 4) of the attaching fixture 2, and is screwed to the hole of the outside part 41A. The connection member 4 is thereby fixed by the supporting edges 22 of the main body part 20 of the attaching fixture 2.

The cylindrical part 42 is a cylindrical member. The cylindrical part 42 protrudes leftward from the outside part 41A of the connection part 41. The cylindrical part 42 has a first cylinder part 42A and a second cylinder part 42B having different outer surface diameters. The second cylinder part 42B is arranged at the left of the first cylinder part 42A. To the second cylinder part 42B, a socket 32 of a ball joint 3, which will be described later, is connected.

The ball joint 3 has a ball stud including a rod section 31 and a not shown spherical section, and the socket 32. The socket 32 is connected to the second cylinder part 42B of the connection member 4. The spherical section of the ball stud is rotatably held by the socket 32. The rod section 31 of the ball stud extends leftward from the spherical section, and is connected to an upper end of the connection fixture 9 which will be described later. The ball joint 3 movably couples the connection member 4 and the connection fixture 9 with three degrees of freedom.

The connection fixture 9 is substantially rod-shaped. The connection fixture 9 is, for example, configured with resins or metals. The connection fixture 9 has a space inside. The connection fixture 9 has a first member 9A and a second member 9B. The space inside the connection fixture 9 is formed by covering an opening at the left side of the first member 9A with the second member 9B. On the upper end of the connection fixture 9, the rod section 31 of the ball stud of the ball joint 3 is connected. On the lower end of the connection fixture 9, a rod section 51 (see Fig. 1) of a ball stud of a ball joint 5, which will be described later, is connected.

As shown in Fig. 1, the ball joint 5 has a ball stud including the rod section 51 and a not shown spherical section, and a socket 52. The socket 52 is connected to a left surface of a rear end of a connection member 6. The connection member 6 is connected to a rear surface of the image display device 10 which will be described later. The connection member 6 is a substantially polygonal prism shaped member extending in the front-rear direction. The spherical section of the ball stud is rotatably held by the socket 52. The rod section 51 of the ball stud extends leftward from the spherical section, and is connected to the lower end of the connection fixture 9. The ball joint 5 movably couples the connection member 6 and the connection fixture 9 with three degrees of freedom.

### <Image Display Device 10>

As shown in Figs. 1 and 6, the image display device 10 includes a casing 11. The casing 11 has a substantially rectangular parallelepiped shape with its corners being rounded. The casing 11 has a hollow box shape. A right side of the casing 11 is opened. A right side of a lens unit housed inside the casing 11 is exposed. The half mirror 14 (see Fig. 6) is provided in an opening of the casing 11. The connection member 6 (see Fig. 1) is connected on a rear surface of the casing 11. The lens unit, a focusing adjustment mechanism, and the liquid crystal unit are housed in the casing 11. The half mirror 14, the lens unit and the liquid crystal unit are arranged in this order from the right side toward the left side. The focusing adjustment mechanism has an operation member 15. The operation member 15 is arranged in on a front surface of the casing 11.

The liquid crystal unit emits image light by displaying an image. The lens unit guides the image light emitted from the liquid crystal unit to the half mirror 14. The focusing adjustment mechanism moves the lens unit in the right-left direction in accordance with rotation of the operation member 15. The user can adjust focusing of the image display device 10 by rotating the operation member 15.

As shown in Fig. 6, the half mirror 14 has a rectangular plate-like shape. One of both faces of the half mirror 14 faces a diagonally rearward left direction. The other of both faces of the half mirror 14 faces a diagonally frontward right direction. The half mirror 14 can reflects a part (e.g., 50%) of incident light, while allowing the other part of the incident light to pass therethrough. The half mirror 14 can reflect image light, passing through the lens unit and incident from the left side, rearward. An eye of the user can visually recognize a virtual image based on the image light reflected rearward by the half mirror 14. Further, the half mirror 14 can allow external light to pass through rearward.

### <HMD 1 Usage Example>

One usage example for HMD 1 will be described. As shown in Fig. 1, firstly, the user positions the main body part 20 of the attaching fixture 2 in the first position. The user wears the helmet 8. Then, the user holds the image display device 10 and the connection fixture 9, and adjust their positions such that the half mirror 14 is positioned in front of the left eye. At this stage, the ball joint 3 allows the connection fixture 9 to move with respect to the main body part 20 of the attaching fixture 2 with three degrees of freedom. Further, the ball joint 5 allows the image display device 10 to move with respect to the connection fixture 9 with three degrees of freedom. That is, the ball joints 3 and 5 allows the image display device 10 to move with respect to the main body part 20 of the attaching fixture 2 with six degrees of freedom. In a three-dimensional space, all the movements of a rigid body can be expressed with six degrees of freedom. Therefore, as shown in Fig. 1, the user can appropriately locate the image display device 10 at a desired position in front of the left eye in a desired orientation.

In this state, an image is displayed on the liquid crystal unit of the image display device 10. The user can visually recognize a virtual image based on the image light reflected rearward by the half mirror 14 of the image display device 10. Further, the user can visually recognize external light that passes through the half mirror 14.

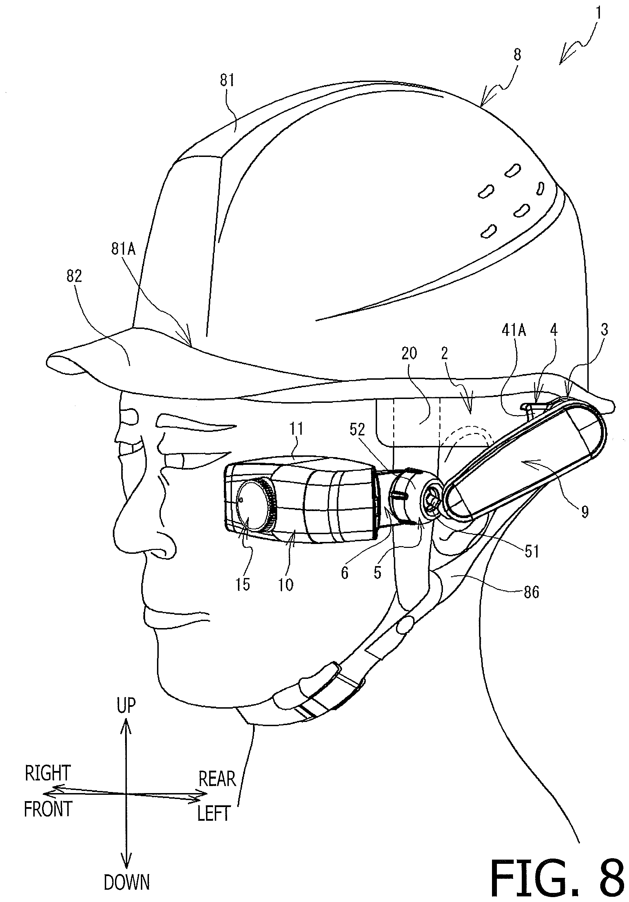

A case where the user temporarily moves the half mirror 14 of the image display device 10 to the outside of the viewing field of the user in the above-mentioned state will be illustrated. As one example of such case, there is a case where needs for the viewing field of the user in front of the eye is higher than the image that is projected at a portion of the viewing field of the user through the half mirror 14. In such a case, the user holds the socket 32 (see Fig. 7) of the ball joint 3 and manipulates it to apply a rearward force. The main body part 20 of the attaching fixture 2 moves from the first position to the second position along the first direction A1 (see Figs. 4 and 5). In the course of the movement of the main body part 20, the image display device 10 moves in a diagonally rearward left direction from the position in front of the left eye of the user to a position at the left with respect to the left eye of the user. As shown in Fig. 8, in a state where the main body part 20 is arranged in the second position, the half mirror 14 of the image display device 10 is arranged outside the viewing field of the user. After the main body part 20 is arranged in the second position, the user ceases to apply the force to the socket 32.

A case where the user returns the position of the image display device 10 to the position in front of the left eye will be illustrated. In such a case, the user holds the socket 32 of the ball joint 3 and manipulates it to apply a frontward force. The main body part 20 of the attaching fixture 2 moves from the second position to the first position along the first direction A1. As shown in Fig. 1, in a state where the main body part 20 is arranged in the first position, the half mirror 14 of the image display device 10 is arranged in front the left eye of the user. It is noted that, in the course of the movement of the main body part 2, the ball joints 3 and 5 do not move. Therefore, the position of the image display device 10 with respect to the main body part 20 does not change before and after the movement of the main body part 20. Accordingly, the image display device 10 returns to the original position before it was moved, and the half mirror 14 becomes arranged within the viewing field of the user.

### <Main Effects of Embodiment

As described above, in the HMD 1, the image display device 10 is coupled to the helmet 8 via the attaching fixture 2. The attaching fixture 2, the connection fixture 9, the connection members 4 and 6, and the ball joints 3 and 5 allow the user wearing the helmet 8 to visually recognize the image displayed on the liquid crystal unit of the image display device 10 by holding the image display device 10 in front of the eye of the user.

The main body part 20 of the attaching fixture 2 can guide the movement of the image display device 10 with respect to the helmet 8 by the first guiding edges 21. A movable range of the main body part 20 of the attaching fixture 2 by the first guiding edges 21 is between the first position and the second position. The first position is arranged forward of the second position. Therefore, by arranging the main body part 20 in the first position, the image display device 10 can be arranged in front of the eye of the user. On the other hand, by arranging the main body part 20 in the second position, the image display device 10 can be retracted to a position that does not obstruct the viewing field of the user when the image display device 10 is not in use. Further, after the main body part 20 is once moved from the first position to the second position, by returning the main body part 20 to the original first position, the retracted image display device 10 can be easily returned to the original position.

The attaching fixture 2 can realize a mechanism for coupling the image display device 10 to the helmet 8 and a mechanism for guiding movement for retracting the image display device 10 from the viewing field with the common first guiding edges 21. Therefore, the attaching fixture 2 makes it possible to reduce the number of components as compared to a case where the coupling function and the retracting function for the image display device 10 with respect to the helmet 8 are separately realized with separate members. Further, the holding parts 84B and 84C of the helmet 8 are inserted in the first openings 26 formed by the first guiding edges 21 of the main body part 20. Also, the main body part 20 moves with respect to the helmet 8 in the first direction A1 in accordance with the movement of the holding parts 84B and 84C along the first openings 26. Accordingly, the attaching fixture 2 makes it possible to easily realize the coupling function and the retracting function for the image display device 10 with simple configurations.

The holding parts 84 are formed on the inner surface 81B of the well-known helmet 8 in advance by integral molding as structures for attaching and holding the inner body 85 and the chin strap 86. The main body part 20 movably couples the attaching fixture 2 to the helmet 8 by using these holding parts 84. Therefore, the attaching fixture 2 can be easily attached to the helmet 8 without any processing on the helmet 8. It is noted that, normally, there are safety standards for the helmet 8, and thus there are problems in terms of safety in changing configurations of the helmet 8. However, by using the attaching fixture 2, it becomes unnecessary to newly provide a member for coupling the attaching fixture 2 to the helmet 8. Therefore, the main body part 20 makes it possible to easily couple the attaching fixture 2 to the helmet 8 without adding any new member.

The first guiding edges 21 of the main body part 20 of the attaching fixture 2 are arranged along the left inner surface 81C of the helmet 8. The main body part 20 is relatively movable with respect to the holding parts 84B and 84C of the helmet 8 in the first direction A1 along the first openings 26A and 26B. In this case, the main body part 20 moves while guided by the left inner surface 81C of the helmet 8. Therefore, the main body part 20 can be stably moved with respect to the helmet 8. Further, a surface area of a portion of the main body part 20 exposed to the outside of the helmet 8 can be suppressed as compared to a case where the first guiding edges 21 of the main body part 20 are arranged along an outer surface of the helmet 8. Accordingly, a possibility that the attaching fixture 2 obstructs work of the user can be reduced. It is noted that, since the main body part 20 has a plate-like shape, even in a case where the attaching fixture 2 is arranged between the head of the user and the helmet 8, it is unlikely that the main body part 20 obstructs the user when the user wears the helmet 8 or when the main body part 20 moves.

To the main body part 20, a plurality of not shown slits extending in the orthogonal direction are provided. Due to these slits, the rigidity of the main body part 20 in the orthogonal direction is greater than the rigidity of the main body part 20 in the first direction A1: In this case, since the rigidity of the main body part 20 becomes relatively smaller in the first direction than in the orthogonal direction, the main body part 20 becomes easier to curve in the first direction. Therefore, the main body part 20 can be easily made to curve along the left inner surface 81C of the helmet 8. Accordingly, the main body part 20 can be moved with respect to the helmet 8 smoothly in the first direction A1.

In the attaching fixture 2, the supporting edges 22 are arranged between the first guiding edges 21A and 21B in the first direction A1. Therefore, a force acting on the main body part 20 as the supporting edges 22 supports the image display device 10 is divided to each of the first guiding edge 21A side and the first guiding edge21B side, and is supported by the holding parts 84B and 84C. Therefore, the attaching fixture 2 can stably support the image display device 10 with the supporting edges 22 as compared to a case where the supporting edges 22 are not provided between the first guiding edges 21A and 21B.

The ball joints 3 and 5 allows the image display device 10 to move with respect to the main body part 20 of the attaching fixture 2 with six degrees of freedom. With this configuration, it becomes possible to move the image display device 10 to the user's desired position. On the other hand, the main body part 20 can be moved with respect to the helmet 8 with one degree of freedom. With this configuration, the image display device 10 can be retracted to a position that does not obstruct the viewing field of the user. Further, by making the degree of freedom (i.e., 1) of the main body part 20 with respect to the helmet 8 smaller than the degree of freedom (i.e., 6) of the image display device 10 with respect to the main body part 20, the user can easily return the retracted image display device 10 to the original position.

### <First Modification>

The present disclosures are not limited to the above-described embodiment, but various modifications are possible. The first modification differs from the HMD 1 of the above-described embodiment in that an attaching fixture 7 is used in place of the attaching fixture 2 (see Fig. 4). Since the helmet 8, the connection fixture 9, the connection members 4 and 6, and the ball joints 3 and 5 are the same as those in the above-described embodiment, hereinafter, descriptions thereof will be omitted.

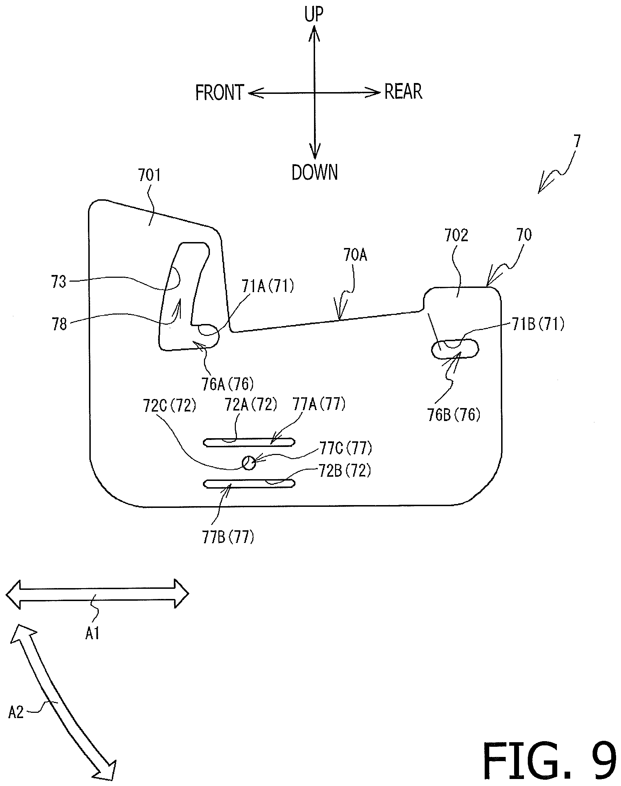

As shown in Fig. 9, the attaching fixture 7 has a main body part 70. The main body part 70 has a plate-like shape. The main body part 70 is, for example, made of resin. Edges of the main body part 70 is curved. An upper end of the main body part 70 protrudes upwardly at both ends in the front-rear direction. A protruding part at the font side will be referred to as a "protruding section 701." A protruding part at the rear side will be referred to as a "protruding section 702." The upper end of the main body part 70 is recessed downward at a portion between the protruding sections 701 and 702. Hereinafter, the portion of the upper end of the main body part 70 that is recessed downward will be referred to as a recessed section 70A. Differently from the main body part 20 (see Fig. 4) of the attaching fixture 2, no recessed section corresponding to the recessed section 20B (see Fig. 4) is provided to the main body part 70. Further, the main body part 70 differs from the main body part 20 (see Fig. 4) of the attaching fixture 2 in that a projection amount of the protruding section 701 at the front side is large as compared to that of the protruding section 702 at the rear side.

The main body part 70 has first guiding edges 71A and 71B (hereinafter collectively referred to as "first guiding edges 71"), a second guiding edge 73, and supporting edges 72A, 72B and 72C (hereinafter collectively referred to as "supporting edges 72"). The first guiding edges 71, the second guiding edge 73 and the supporting edges 72 are annular edges forming respective openings. The openings formed by the first guiding edges 71, the second guiding edge 73 and the supporting edges 22 penetrate through the main body part 70 in the right-left direction.

The first guiding edges 71 form openings elongated in the front-rear direction. The first guiding edges 71 are formed on an upper side of the main body part 70 with respect to the center in the up-down direction. The first guiding edges 71A and 71B have substantially the same shape. Hereinafter, the opening formed by the first guiding edge 71A will be referred to as a "first opening 76A." The opening formed by the first guiding edge 71B will be referred to as a "first opening 76B." The first openings 76A and 76B will be collectively referred to as "first openings 76."

A length (width) of each of the first openings 76 in the up-down direction is substantially the same as the sectional diameter of each of the holding parts 84 (see Fig. 2) except the tip thereof. The first opening 76A extends linearly frontward from the proximity of a lower end of a rear end of the protruding section 701. The first opening 76B extends linearly frontward from the proximity of a rear end of the main body part 70. Lengths of the first openings 76A and 76B in the front-rear direction are substantially 1/10 of a length of the main body part 70 in the front-rear direction. The lengths of the first openings 76A and 76B in the front-rear direction are short as compared to the length of the first openings 26A and 26B (see. Fig. 4) of the attaching fixture 2 in the front-rear direction. Positions of the first openings 76A and 76B in the up-down direction are substantially the same. The first openings 76A and 76B are separated in the front-rear direction.

The second guiding edge 73 is provided to the protruding section 701. The second guiding edge 73 forms an opening elongated in a direction inclined with respect to the up-down direction. A lower edge of the second guiding edge 73 is connected to a front edge of the first guiding edge 71A. Hereinafter, the opening formed by the second guiding edge 73 will be referred to as a "second opening 78."

A length (width) of the second opening 78 in the front-rear direction is slightly larger than the width of each of the first openings 76. The second opening 78 extends from the front edge of the first opening 76A in a diagonally upper rear direction while curving. An upper end of the second opening 78 is arranged in proximity to an upper end of the rear end of the protruding section 701. The length of the second opening 78 is substantially three times the length of each of the first openings 76.

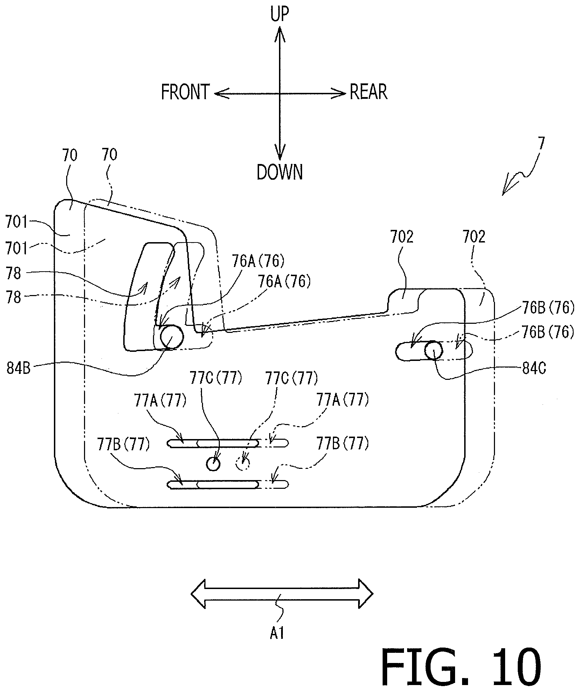

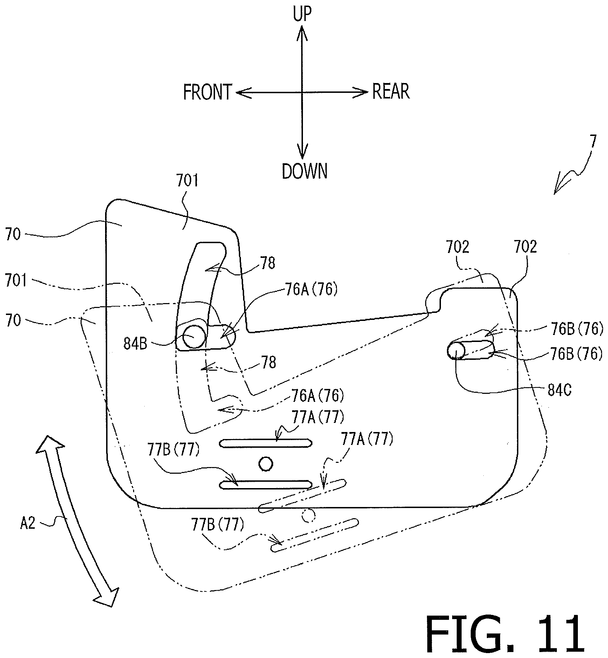

As shown in Figs. 10 and 11, the attaching fixture 7 is coupled to the left inner surface 81C (see Fig. 2 and Fig. 3) of the cap body 81 of the helmet 8 by the first guiding edges 71 and the second guiding edge 73. The holding part 84B of the helmet 8 is inserted through the first opening 76A and the second opening 78 from the left side. The holding part 84C of the helmet 8 is inserted through the first opening 76B from the left side.

As shown in Fig. 10, the first guiding edges 71A and 71B guide the holding parts 84B and 84C in a direction along the first openings 76A and 76B. The attaching fixture 7 is relatively movable with respect to the holding parts 84B and 84C of the helmet 8 in the direction along the first openings 76A and 76B. Solid lines in Fig. 10 show a state where the main body part 70 has moved to the foremost side with respect to the helmet 8. Hereinafter, the position of the main body part 70 in this state will be referred to as a "first position." Dotted lines in Fig. 10 show a state where the main body part 70 has moved to the rearmost side with respect to the helmet 8. Hereinafter, the position of the main body part 70 in this state will be referred to as a "second position." A moving direction of the main body part 70 when the main body part 70 moves between the first position and the second position will be referred to as a "first direction A1."

As shown in Fig. 11, the second guiding edge 73 guides the holding part 84B in a direction along the second opening 78. The attaching fixture 7 is rotatable in a direction along the second opening 78. Solid lines in Fig. 11 shows the main body part 70 arranged at the second position. Dotted lines in Fig. 11 shows the main body part 70 rotated in a counterclockwise direction when the main body part 70 is viewed from the left side. Hereinafter, the position of the main body part 70 in this state will be referred to as a "third position." The moving direction of the main body part 70 when the main body part 70 rotates between the second position and the third position will be referred to as a "second direction A2." The first direction A1 and the second direction A2 intersect with each other. The main body part 70 becomes movable with respect to the helmet 8 in two degrees of freedom.

As shown in Fig. 10, the supporting edges 72 are formed on a lower side of the main body part 70 with respect to the center in the up-down direction. Shapes of the supporting edges 72A, 72B and 72C are identical to those of the supporting edges 22A, 22B and 22C of the attaching fixture 2. Hereinafter, the opening formed by the supporting edge 72A will be referred to as a "third opening 77A." The opening formed by the supporting edge 72B will be referred to as a "third opening 77B." The opening formed by the supporting edge 72C will be referred to as a "third opening 77C." The third openings 77A, 77B and 77C will be collectively referred to as "third openings 77." The first guiding edges 71 and the second guiding edge 73 are separated from the supporting edges 72 in an orthogonal direction which is orthogonal to the first direction A1. To the supporting edges 72, the image display device 10 (see Fig. 1) is connected via a connection fixture 9, connection members 4 and 6, and ball joints 3 and 5 (see Fig. 1).

One usage example for HMD 1 according to the first modification will be described. Firstly, the user positions the main body part 70 of the attaching fixture 7 in the first position. The user wears the helmet 8. Then, the user holds the image display device 10 and the connection fixture 9, and adjust their positions such that the half mirror 14 is positioned in front of the left eye. An image is displayed on the liquid crystal unit of the image display device 10. The user visually recognizes a virtual image based on the image light reflected rearward by the half mirror 14.

In a case where the user temporarily moves the half mirror 14 of the image display device 10 to the outside of the viewing field, the user firstly holds the socket 32 (see Fig. 7) of the ball joint 3 and manipulates it to apply a rearward force. The main body part 70 of the attaching fixture 7 moves from the first position to the second position along the first direction A1 (see Figs. 9 and 10).

It is noted that the length of each of the first openings 76 is shorter than the length of each of the first openings 26 (see Fig. 4) of the main body part 20. Therefore, a moving amount of the main body part 70 when it moves from the first position to the second position is smaller than a moving amount of the main body part 20 when it moves from the first position to the second position. Also, during the process of the main body part 70 moving from the first position to the second position, the supporting edges 72 move along a left side portion of the edge 81A of the helmet 8. A distance between the helmet 8 and the supporting edges 72 in the up-down direction is kept substantially constant during the process of the main body part 70 moving from the first position to the second position.

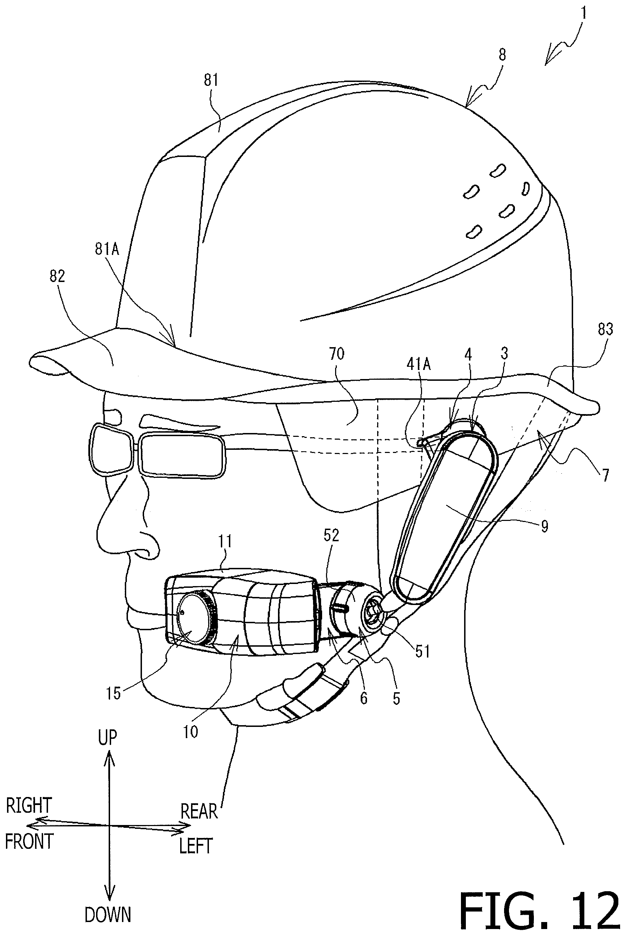

Then, the user holds the socket 32 (see Fig. 7) of the ball joint 3 and manipulates it to apply a downward force. The main body part 70 of the attaching fixture 7 moves from the second position to the third position along the second direction A2 (see Figs. 9 and 11). During the process of the movement of the main body part 70, the image display device 10 moves downward from the position in front of the left eye of the user to a diagonally lower front position with respect to the left eye of the user. As shown in Fig. 12, in a state where the main body part 70 is arranged at the third position, the half mirror 14 of the image display device 10 is arranged outside the viewing field.

It is noted that, during the process of the main body part 70 moving from the second position to the third position, the supporting edges 72 (see Fig. 9) move in a direction away from the left side portion of the edge 81A of the helmet 8. A distance between the helmet 8 and the supporting edges 72 in the up-down direction in the case where the main body part 70 is arranged at the third position is greater than the distance between the helmet 8 and the supporting edges 72 in the up-down direction in the case where the main body part 70 is arranged at the first position and the second position.

In a case where the user returns the image display device 10 to the original position to arrange the image display device 10 at a desired positon in front of the left eye, the user holds the socket 32 of the ball joint 3 and manipulates it to apply an upward force. The main body part 70 of the attaching fixture 7 moves from the third position to the second position along the second direction A2. Then, the user holds the socket 32 of the ball joint 3 and manipulates it to apply a frontward force. The main body part 70 of the attaching fixture 7 moves from the second position to the first position along the first direction A1. The display device 10 returns to the original position before it was moved, and the half mirror 14 becomes arranged within the viewing field.

It is noted that, during the above described process, the ball joints 3 and 5 do not move. Therefore, the position of the image display device 10 with respect to the main body part 70 of the attaching fixture 7 does not change before and after the movement. Therefore, the display device 10 returns to the original position before it was moved, and the half mirror 14 becomes arranged within the viewing field.

### < Effects of First Modification>

In the first modification, the first guiding edges 71 of the attaching fixture 7 can guide the main body part 70 between the first position and the second position in the first direction A1. The movable range of the main body part 70 of the attaching fixture 7 by the first guiding edges 71 is between the first position and the second position. The first position is arranged at the front side with respect to the second position. Also, the second guiding edge 73 of the attaching fixture 7 can guide the main body part 70 between the second position and the third position in the second direction A2. The movable range of the main body part 70 of the attaching fixture 7 by the second guiding edge 73 is between the second position and the third position. The third position is arrange on the lower side with respect to the second position. Therefore, the attaching fixture 7 makes it possible to retract the image display device 10 downward with respect to the left eye when the image display device 10 is not in use, while keeping the simple configuration of the attaching fixture 7. Accordingly, the attaching fixture 7 makes it possible to further appropriately retract the image display device 10 to the outside of the viewing field of the user.

It is noted that, in the attaching fixture 7, the moving amount of the main body part 70 when the main body part 70 moves from the first position to the second position is smaller than the moving amount of the main body part 20 of the attaching fixture 2 when the main body part 20 moves from the first position to the second position. Therefore, for example, in a case where the user is wearing eyeglasses as shown in Fig. 12, contact between the image display device 10 and the eyeglasses when the attaching fixture 7 moves from the first position to the second position can be suppressed.

In the attaching fixture 7, the holding part 84B of the helmet 8 is inserted to the second opening 78 formed by the second guiding edge 73 of the main body part 70. Also, in accordance with the movement of the holding part 84B along the second opening 78, the main body part 70 rotates, with respect to the helmet 8, about the holding part 84C in the second direction A2. Therefore, the attaching fixture 7 realizes the coupling function and the retracting function for the image display device 10 with simple configurations.

### <Second Modification>

The second modification differs from the HMD 1 of the above-described embodiment in that an attaching fixture 2A is used in place of the attaching fixture 2 (see Fig. 4). The attaching fixture 2A differs from the attaching fixture 2 in the shape of the first guiding edges 21. Since the helmet 8, the connection fixture 9, the connection members 4 and 6, and the ball joints 3 and 5 are the same as those in the above-described embodiment, hereinafter, descriptions thereof will be omitted. Also, among configurations of the attaching fixture 2A, configurations that are the same as those of the attaching fixture 2 will be assigned the same reference numerals as the attaching fixture 2, and descriptions thereof will be omitted.

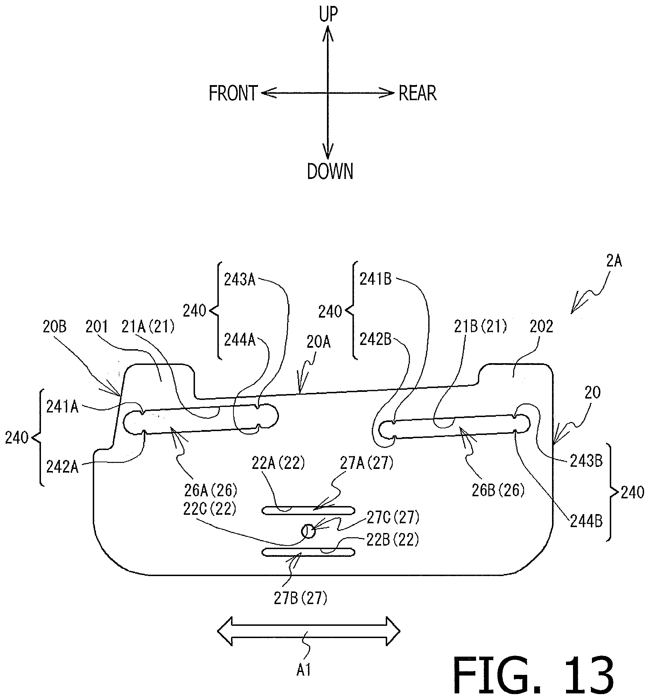

As shown in Fig. 13, in the attaching fixture 2A, first protrusions 241A, 242A, 243A and 244A are provided to the first guiding edge 21A. First protrusions 241B, 242B, 243B, 244B are provided to the first guiding edge 21B. Hereinafter, the first protrusions 241A, 242A, 243A, 244A, 241B, 242B, 243B and 244B will be collectively referred to as "first protrusions 240." The first protrusions 240 protrude from the first guiding edges 21 toward the inside of the first openings 26.

The first protrusions 241A and 242A are provided near the front end of the first guiding edges 21A. The first protrusions 243A and 244A are provided near the rear end of the first guiding edge 21A. The first protrusions 241A and 243A protrude downwardly from the upper end of the first guiding edge 21A. The first protrusions 242A and 244A protrude upwardly from the lower end of the first guiding edge 21A. The first protrusions 241A and 242A oppose to each other in the up-down direction. The first protrusions 241A and 242A are separated in the up-down direction. The first protrusions 243A and 244A oppose to each other in the up-down direction. The first protrusions 243A and 244A are separated in the up-down direction.

A length between the front end of the first guiding edge 21A to the first protrusions 241A and 242A is slightly greater than the sectional diameter of each of the holding parts 84 (see Fig. 2) except the tip thereof. A length of the separation between the first protrusions 241A and 242A is slightly smaller than the sectional diameter of each of the holding parts 84 except the tip thereof. A length between the rear end of the first guiding edge 21A and the first protrusions 243A and 244A is slightly greater than the sectional diameter of each of the holding parts 84 except the tip thereof. A length of the separation between the first protrusions 243A and 244A is slightly smaller than the sectional diameter of each of the holding parts 84 except the tip thereof.

A shape of the first guiding edge 21B including the first protrusions 241B-244B is substantially the same as the shape of the first guiding edge 21A including the first protrusions 241A-244A. The first protrusions 241B, 242B, 243B and 244B of the first guiding edge 21B corresponds to the first protrusions 241A, 242A, 243A and 244A of the first guiding edge 21A, respectively.

A case where the user holds the socket 32 (see Fig. 7) of the ball joint 3 and manipulates it to apply a frontward force to arrange the image display device 10 in front of the left eye of the user will be illustrated. The main body part 20 of the attaching fixture 2A moves with respect to the helmet 8 toward the first position along the first direction A1. In the course of the movement of the main body part 20 to the first position, the holding part 84B (see Fig. 5) contacts rear sides of the first protrusions 241A and 242A, and the holding part 84C (see Fig. 5) contacts rear sides of the first protrusions 241B and 242B. In response to a frontward force being applied to the main body part 20, the holding part 84B pushes portions of the first guiding edge 21A where the first protrusions 241A and 242A are provided outward to expand. Thereby, the holding part 84B moves to the front side with respect to the first protrusions 241A and 242A. Similarly, the holding part 84C pushes portions of the first guiding edge 21B where the first protrusions 241B and 242B are provided outward to expand. Thereby, the holding part 84C moves to the front side with respect to the first protrusions 241B and 242B. The main body part 20 is arranged at the first position.

In a state where the main body part 20 is arranged at the first position, the first protrusions 241A and 242A restricts the holding part 84B from moving rearward. The first protrusions 241B and 242B restricts the holding part 84C from moving rearward. Therefore, the main body part 20 is restricted from moving from the first position toward the second position.

A case where the user holds the socket 32 (see Fig. 7) of the ball joint 3 and manipulates it to apply a rearward force so as to temporarily move the half mirror 14 of the image display device 10 to the outside of the viewing field will be illustrated. The main body part 20 of the attaching fixture 2A moves with respect to the helmet 8 from the first position to the second position along the first direction A1. In the course of the rearward movement of the main body part 20 from the first position, the holding part 84B contacts front sides of the first protrusions 241A and 242A, and the holding part 84C contacts front sides of the first protrusions 241B and 242B. In response to a rearward force being applied to the main body part 20, the holding part 84B pushes portions of the first guiding edge 21A where the first protrusions 241A and 242A are provided outward to expand. Thereby, the holding part 84B moves to the rear side with respect to the first protrusions 241A and 242A. Similarly, the holding part 84C pushes portions of the first guiding edge 21B where the first protrusions 241B and 242B are provided outward to expand. Thereby, the holding part 84C moves to the front side with respect to the first protrusions 241B and 242B.

Further, in the course of the movement of the main body part 20 to the second position, the holding part 84B contacts front sides of the first protrusions 243A and 244A, and the holding part 84C contacts front sides of the first protrusions 243B and 244B. In response to a rearward force being applied to the main body part 20, the holding part 84B pushes portions of the first guiding edge 21A where the first protrusions 243A and 244A are provided outward to expand. Thereby, the holding part 84B moves to the rear side with respect to the first protrusions 243A and 244A. Similarly, the holding part 84C pushes portions of the first guiding edge 21B where the first protrusions 243B and 244B are provided outward to expand. Thereby, the holding part 84C moves to the rear side with respect to the first protrusions 243B and 244B. The main body part 20 is arranged at the second position.

In a state where the main body part 20 is arranged at the second position, the first protrusions 243A and 244A restricts the holding part 84B from moving frontward. The first protrusions 243B and 244B restricts the holding part 84C from moving frontward. Therefore, the main body part 20 is restricted from moving from the second position toward the first position.

### < Effects of Second Modification>

In the second modification, the first protrusions 240 are provided to the first guiding edges 21 of the attaching fixture 2A. The first protrusions 240 restrict the main body part 20 from moving toward the second position in the state where the main body part 20 is arranged at the first position, and restrict the main body part 20 from moving toward the first position in the state where the main body part 20 is arranged at the second position. Therefore, for example, in a case where an impact is applied to the helmet 8 or the attaching fixture 2A from outside, the position of the main body part 20 with respect to the helmet 8 is kept at the first position or the second position. Accordingly, a possibility that the attaching fixture 2A unintendedly moves with respect to the helmet 8 can be lessened.

It is noted that, in the second modification, only the first protrusions 241A, 242A, 241B and 242B may be provided to the first guiding edges 21. In this case, only the movement of the main body part 20 from the first position toward the second position is restricted. On the other hand, only the first protrusions 243A, 244A, 243B and 244B may be provided to the first guiding edges 21. In this case, only the movement of the main body part 20 from the second position toward the first position is restricted. Also, only one of the opposing first protrusions 240 may be provided to the first guiding edges 21, and the other may not be provided. Also, protrusions similar to the first protrusions may be provided at an upper end of the second guiding edge 73 of the first modification.

### < Other Modifications>

The subject to which the attaching fixture 2 is to be attached is not limited to the helmet 8. For example, the attaching fixture 2 may be a cap or a head band worn by the user. The subject to be supported by the supporting edges 22 of the attaching fixture 2 is not limited to the image display device 10. For example, the supporting edges 22 of the attaching fixture 2 may be a headlight, a magnifier, protective eyeglasses that protect the user the eyes and the like. The attaching fixture 2 may support the image display device 10 with respect to the main body part 20 with configurations other than the supporting edges 22. For example, the attaching fixture 2 may have an adsorption part that adsorbs the socket 32 of the ball joint 3 on its surface.

In the main body part 20, the first guiding edges 21A and 21B may extend in the up-down direction. In this case, after the position of the image display device 10 is adjusted so that the half mirror 14 is arranged in front of the left eye, the user may move the main body part 20 downward to temporarily move the half mirror 14 of the image display device 10 to the outside of the viewing field. Also, in the main body part 70, the first guiding edge 71A may be formed to extend frontward from the upper end of the second guiding edge 73. In this case, after the position of the image display device 10 is adjusted so that the half mirror 14 is arranged in front of the left eye, the user may firstly move the image display device 10 downward by rotating the main body part 70 along the second direction A2 and dien move the main body part 70 rearward along the first direction A1.

The main body part 20 of the attaching fixture 2 moves between the first position and the second position in the first direction in accordance with the relative movement of the holding parts 84B and 84C along the first openings 26 formed by the first guiding edges 21. However, the configuration for guiding the holding parts 84B and 84C in the first direction is not limited to the opening. For example, a sliding holder (such as a rail) that slidably holds the holding parts 84B and 84C may be provided in place of the first guiding edges 21. The main body part 20 may move between the first position and the second position in the first direction in accordance with the relative movement of the holding parts 84B and 84C along the sliding holder. The second opening 78 formed by the second guiding edge 73 of the main body part 70 of the attaching fixture 7 may be changed to the sliding holder that slidably holds the holding part 84B.

In the above described embodiment, the attaching fixture 2 is coupled to the helmet 8 by inserting the holding parts 84B and 84C provided to the helmet 8 to the first openings 26. However, coupling parts protruding from the main body part 20 of the attaching fixture 2 may be provided in place of the first guiding edges 21 forming the first openings 26. Also, grooves into which the coupling parts protruding from the main body part 20 of the attaching fixture 2 are to be inserted may be provided to the helmet 8 in place of the holding parts 84B and 84C. In this case, the attaching fixture 2 may move with respect to the helmet 8 in the first direction in accordance with the movement of the coupling parts on the main body part 20 with respect to grooves on the helmet 8. The coupling part may be provided to both the main body part 20 of the attaching fixture 2 and the helmet 8. Holding parts that movably hold both coupling parts may further be provided. In this case, the attaching fixture 2 may move with respect to the helmet 8 in the first direction by the relative movements of both coupling parts with respect to the holding parts.

The holding parts 84 of the helmet 8 are integrally formed on the inner surface 81B in advance to attach the inner body 85. However, a helmet 8 that does not have the holding parts 84 may be used. In this case, the holding parts 84 may be retrofitted to the inner surface 81B of the helmet 8.

The attaching fixture 2 moves in the first direction along the left inner surface 81C of the helmet 8. For example, in a case where members corresponding to the holding parts 84 are provided on the outer surface of the helmet 8 as well, the attaching fixture 2 may be coupled to the helmet 8 by inserting the holding parts on the outer surface of the helmet 8 in the first openings 26. In this case, the main body part 20 may move in the first direction along the outer surface of the helmet 8. Also, the main body part 20 may have a shape that makes it possible to clamp the inner surface 81B and the outer surface of the helmet 8. In this case, the main body part 20 may move along the outer surface and the inner surface of the helmet 8.

On the main body part 20 of the attaching fixture 2, a plurality of slits extending in the orthogonal direction are provided. By these slits, the rigidity of the main body part 20 is adjusted such that the rigidity of the main body part 20 in the orthogonal direction is greater than the rigidity of the main body part 20 in the first direction A1. However, the rigidity of the main body part 20 may be uniform throughout the main body part 20. Instead, the main body part 20 may be curved in advance according to a curve of the left inner surface 81C of the helmet 8.

In the attaching fixture 2, the supporting edges 22 may be provided right below one of the first guiding edges 21A and 21B. The rear end of the first guiding edge 21A and the front end of the first guiding edge 21B may be connected. In this case, the first guiding edges 21 may form one first opening extending in the right-left direction. The position of the attaching fixture 2 with respect to the helmet 8 may move by the relative movement of the holding parts 84B and 84C along the one opening.

In the attaching fixture 7, the second guiding edge 73 may extend downward from the front end of the first guiding edge 71 A. In this case, the main body part 70 may move from the second position to the third position by rotating in a clockwise direction when viewed from the left. The third position may be positioned above the second position. In this case, the image display device 10 moves upward with respect to the left eye of the user. Even in such a case, the attaching fixture 7 allows the half mirror 14 of the image display device 10 to be temporarily moved to the outside of the viewing field.

Needless to say, the mechanism for movably holding the image display device 10 with respect to the main body part 20 is not limited to the ball joints 3 and 5. In this case, the degrees of freedom at the upper end and the lower end of the connection fixture 9 may not be three. For example, in a case where a head light is attached instead of the image display device 10, no precise position adjustment such as that for the image display device 10 is necessary. In such a case, a mechanism having lesser degree of freedom for the movement may be provided in place of the ball joints 3 and 5. Also, for example, a head light or the like may be movably fixed to the attaching fixture 2. As in this case, the degree of freedom for the movement of the head light or the like may be less than the degree of freedom for the movement of the main body part 20 with respect to the helmet 8.

The HMD 1 may not include the helmet 8. That is, the HMD 1 may have a configuration that includes the attaching fixture 2, the connection fixture 9, and the image display device 10. In this case, the HMD 1 may be made to be attachable to arbitrary helmet. In place of the liquid crystal unit of the image display device 10, a two-dimensional display device such as a Digital Mirror Device (DMD) or an organic EL may be used. Further, a retina scanning type projection apparatus (retinal scanning display) that projects two-dimensionally scanned light on a retina of the user may be used.

### <Others>

The "helmet 8" is an example of the "mounting fixture" of the present disclosures. The "image display device 10" is an example of the "attached member" of the present disclosures. The "first guiding edges 21" are examples of the "first guiding part" of the present disclosures. The "second guiding edge 73" is an example of the "second guiding part" of the present disclosures. The "image display device 10" is an example of the "display device" of the present disclosures. The "holding parts 84" are examples of the "coupling part" of the present disclosures. The "HMD1" is an example of the "display system" of the present disclosure. The system including the helmet 8 and the attaching fixture 2 is an example of the "attaching system" of the present disclosures.

### EXPLANATION OF REFERENCE SIGNS

1 : HMD
2,7 : attaching fixture
8 : helmet
10 : image display device
20 : main body part
21, 21A, 21B . first guiding edge
22, 22A, 22B, 22C : supporting edge
26, 26A, 26B : first opening
71, 71A, 71B : first guiding edge
72, 72A, 72B, 72C : supporting edge
73 : second guiding edge
76, 76A, 76B : first opening
78 : second opening
84, 84A, 84B, 84C, 84D : holding part
85 : inner body
A1 : first direction
A2 : second direction

## Claims

1. An attaching fixture provided with a main body part being movable, with respect to a mounting fixture worn on a head of a user, between a first position and a second position,
the main body part comprising:
a supporting part configured to support an attached member with respect to the main body part; and
a first guiding part configured to be coupled to the mounting fixture and to guide a position of the supporting part of the main body part, with respect to the mounting fixture, between the first position and the second position in a first direction.

2. The attaching fixture according to claim 1,
wherein the main body part further comprises a second guiding part configured to be coupled to the mounting fixture and to guide a position of the supporting part of the main body part, with respect to the mounting fixture, between the second position and a third position in a second direction,
wherein the first direction and the second direction intersect with each other, and wherein a distance between the mounting fixture and the supporting part when the main body part is arranged at the third position is greater than a distance between the mounting fixture and the supporting part when the main body part is arranged at the second position.

3. The attaching fixture according to claim 1,
wherein the main body part is configured to be coupled to the mounting fixture by a coupling part provided to at least one of the mounting fixture and the main body part.

4. The attaching fixture according to claim 3,
wherein the first guiding part has a first guiding edge being an annular edge forming a first opening of the main body part, the first guiding edge being configured to guide the coupling part, positioned between the mounting fixture and the main body part, in the first direction along the first opening.

5. The attaching fixture according to claim 2,
wherein the main body part is configured to be coupled to the mounting fixture by a coupling part provided to at least one of the mounting fixture and the main body part.

6. The attaching fixture according to claim 5,
wherein the second guiding part has a second guiding edge being an annular edge forming a second opening of the main body part, the second guiding edge being configured to guide the coupling part, positioned between the mounting fixture and the main body part, in the second direction along the second opening.

7. An attaching fixture attached to a mounting fixture worn on a head of a user and having a main body part,
the main body part comprising:
a supporting part configured to support an attached member with respect to the main body part; and
a first guiding part having an annular first guiding edge forming a first opening configured to be coupled to a coupling part provided to the mounting fixture.

8. The attaching fixture according to claim 7,
wherein the first guiding edge is configured to guide a position of the supporting part of the main body part, with respect to the mounting fixture, between a first position and a second position in a first direction by guiding the coupling part along the first opening.

9. The attaching fixture according to claim 8,
wherein the main body part further comprises a second guiding part having an annular second guiding edge forming a second opening configured to be coupled to the coupling part
wherein the second guiding edge guides a position of the supporting part of the main body part, with respect to the mounting fixture, between the second position and a third position in a second direction by guiding the coupling part along the second opening,
wherein the first direction and the second direction intersect with each other, and wherein a distance between the mounting fixture and the supporting part when the main body part is arranged at the third position is greater than a distance between the mounting fixture and the supporting part when the main body part is arranged at the second position.

10. The attaching fixture according to any one of claims 3 to 9,
wherein the coupling part is integrally formed on the mounting fixture.

11. The attaching fixture according to any one of claims 1 to 10,
wherein the main body part is configured to move along at least one of two opposing surfaces of the mounting fixture.

12. The attaching fixture according to any one of claims 1 to 11,
wherein the first guiding part is arranged along a surface, among two opposing surfaces of the mounting fixture, on a side closer to the head in a state where the mounting fixture is worn by the user.

13. The attaching fixture according to any one of claims 1 to 6 and 8,
wherein the supporting part and the first guiding part are separated in an orthogonal direction being orthogonal to the first direction, and
wherein a rigidity of the main body part in the orthogonal direction is greater than a rigidity of the main body part in the first direction.

14. The attaching fixture according to any one of claims 4, 8 and 9,
wherein the first guiding edge comprises a first protrusion protruding inside the fist opening, the first protrusion being a portion that restricts movement of the main body part with respect to the mounting fixture in the first direction.

15. The attaching fixture according to any one of claims 1 to 6 and 8,
wherein the main body part has at least two first guiding parts, and
wherein the supporting part is provided between the two first guiding parts in the first direction.

16. A display system having a mounting fixture to be worn on a head of a user; an attaching fixture comprising a main body part being movable, with respect to the mounting fixture, between a first position and a second position; and a display device being supported by the attaching fixture and being capable to display an image,
the main body part comprising:
a supporting part configured to support the display device with respect to the main body part;
a first guiding part configured to be coupled to the mounting fixture and to guide a position of the supporting part of the main body part, with respect to the mounting fixture, between the first position and the second position in a first direction; and
a second guiding part configured to be coupled to the mounting fixture and to guide a position of the supporting part of the main body part, with respect to the mounting fixture, between the second position and a third position in a second direction,
wherein the first direction and the second direction intersect with each other, and
wherein a distance between the mounting fixture and the supporting part when the main body part is arranged at the third position is greater than a distance between the mounting fixture and the supporting part when the main body part is arranged at the second position.

17. The display system according to claim 16,
wherein the first position is positioned forward of the second position with respect to the user in a state where the mounting fixture is worn on the head.

18. The display system according to claim 16 or 17,
wherein the third position is positioned below the first position and the second position in a state where the mounting fixture is worn on the head.

19. The display system according to any one of claims 16 to 18,
wherein the main body part is movable with respect to the mounting fixture with n degrees of freedom ("n" being an integral number),
wherein the display device is moveable with respect to the main body part with degrees of freedom greater than n.

20. An attaching system having a mounting fixture to be worn on a head of a user and an attaching fixture comprising a main body part,
the main body part comprising:
a supporting part configured to support an attached member with respect to the main body part; and
a first guiding part having an annular first guiding edge forming a first opening configured to be coupled to a coupling part provided to the mounting fixture.

21. The attaching system according to claim 20,
wherein the first guiding edge is configured to guide a position of the supporting part of the main body part, with respect to the mounting fixture, between a first position and a second position in a first direction by guiding the coupling part along the first opening,
wherein the first position is positioned forward of the second position with respect to the user in a state where the mounting fixture is worn on the head.

22. The attaching system according to claim 20 or 21,
wherein the mounting fixture is a cap body.

23. The attaching system according to claim 22,
wherein the cap body has a holding part, configured to hold an inner body, as the coupling part.

24. an attaching system having a mounting fixture to be worn on a head of a user and an attaching fixture comprising a main body part being movable, with respect to the mounting fixture, between a first position and a second position,
the main body part comprising:
a supporting part configured to support an attached member with respect to the main body part; and
a first guiding part configured to be coupled to the mounting fixture and to guide a position of the supporting part of the main body part, with respect to the mounting fixture, between the first position and the second position in a first direction.

25. The attaching system according to claim 24,
wherein the first position is positioned forward of the second position with respect to the user in a state where the mounting fixture is worn on the head.

26. The attaching system according to claim 24 or 25,
wherein the mounting fixture is a cap body.

27. The attaching system according to claim 26,
wherein the cap body has a holding part configured to hold an inner body, wherein the main body part is coupled to the cap body by the holding part.
